# EUROPÄISCHE PATENTANMELDUNG

(11) **EP 2 305 573 A1**
(43) Veröffentlichungstag der Anmeldung: **06.04.2011**
(21) Anmeldenummer: 10175252.5
(22) Anmeldetag: 03.09.2010
(51) Int. Cl.: B65D 51/24

(54) **Behälter mit einem als abnehmbares Besteckteil ausgebildeten Verschluss**

(30) Priorität: 30.09.2009 DE 202009011090 U
(71) Anmelder: Cofresco Frischhalteprodukte GmbH & Co. KG, 32427 Minden (DE)
(72) Erfinder: Aust, Susanne, 31177, Borsum (DE); Van Dyck, Thomas, 32423, Minden (DE)
(74) Vertreter: Dantz, Jan Henning

(57) **Zusammenfassung**

Behälter (1), insbesondere für Lebensmittel, mit einem schalenförmigen Unterteil (2), an dem ein Deckel (3) montiert ist, und mindestens einem Verschluss (6), mittels dem der Deckel (3) an dem Unterteil (2) verriegelbar ist, wobei der mindestens eine Verschluss (6) als abnehmbares Besteckteil ausgebildet ist.

## Beschreibung

Die vorliegende Erfindung betrifft einen Behälter, insbesondere für Lebensmittel, mit einem schalenförmigen Unterteil, an dem ein Deckel montiert ist, und einem Verschluss, mittels dem der Deckel an dem Unterteil verriegelbar ist.

Es gibt Behälter für Nahrungsmittel, bei denen in einem schalenförmigen Unterteil ein Lebensmittel, beispielsweise ein Joghurt oder ein Dessert, eingefüllt ist und das Unterteil mit einem Deckel verschlossen ist. Nach dem Öffnen des Deckels lässt sich der Behälter nicht mehr verschließen. Zudem muss ein Besteck zum Verzehr gesondert bereitgehalten werden.

Es ist daher Aufgabe der vorliegenden Erfindung, einen Behälter für Lebensmittel zu schaffen, der komfortabel in der Handhabung ist und ein mehrfaches Öffnen und Verschließen ermöglicht.

Diese Aufgabe wird mit einem Behälter mit den Merkmalen des Anspruches 1 gelöst.

Erfindungsgemäß ist an einem schalenförmigen Unterteil ein Deckel montiert, wobei über einen Verschluss der Deckel an dem Unterteil verriegelbar ist und der Verschluss als abnehmbares Besteckteil ausgebildet ist. Dadurch kann der Benutzer den Deckel von dem Unterteil verschwenken oder entfernen und bei Bedarf wieder verschließen, was die Handhabung vereinfacht. Zudem muss kein weiteres Besteckteil bereitgehalten werden, da der Verschluss als abnehmbares Besteckteil ausgebildet ist.

Vorzugsweise weist der Verschluss einen hakenförmigen Abschnitt auf, der den Deckel zumindest teilweise übergreift. Dadurch kann der Deckel mit einem gewissen Anpressdruck gegen das Unterteil gedrückt sein, was auch ein dichtes Verschließen des Behälters ermöglicht. Die Besteckausformung ist vorzugsweise an der zum hakenförmigen Abschnitt gegenüberliegenden Seite ausgebildet, wobei die Besteckausformung als Löffel oder Gabel ausgebildet sein kann. Die Besteckausformung ist dabei vorzugsweise benachbart zu einer Seitenwand des Unterteils angeordnet, damit die Besteckausformung nicht so leicht verschmutzt.

Für ein einfaches Verriegeln des Verschlusses ist an dem Deckel vorzugsweise ein Vorsprung ausgebildet, der in eine Aussparung an dem hakenförmigen Abschnitt einfügbar ist. Der hakenförmige Abschnitt an dem Verschluss verhindert eine Bewegung des Deckels in Öffnungsrichtung. Ferner kann an dem Unterteil ein Halteelement ausgebildet sein, mittels dem der Verschluss an dem Unterteil fixierbar ist. Dadurch kann durch eine Schwenkbewegung des Verschlusses ein einfaches Verriegeln des Deckels an dem Unterteil erfolgen.

Für eine Abdichtung des Behälters kann zwischen dem Deckel und dem Unterteil ein elastisches Dichtmittel angeordnet sein, insbesondere ein Dichtring.

Die Erfindung wird nachfolgend anhand eines Ausführungsbeispiels mit Bezug auf die beigefügten Zeichnungen näher erläutert. Es zeigen:
- Figur 1: eine Seitenansicht eines Ausfiührungsbeispieles eines erfindungsgemä- ßen Behälters;
- Figur 2: eine perspektivische Ansicht des Behälters der Figur 1;
- Figur 3: eine Seitenansicht des Behälters der Figur 1 beim Entriegeln, und
- Figur 4: eine perspektivische Ansicht des Behälters der Figur 1 mit geöffnetem Deckel.

Ein Behälter 1 umfasst ein schalenförmiges Unterteil 2, in dem ein Lebensmittel, beispielsweise ein Milchprodukt oder ein Dessert, eingefüllt ist, wobei das Unterteil 2 über einen Deckel 3 verschlossen ist. Unterteil 2 und Deckel 3 können dabei aus Kunststoff und/oder Metall ausgebildet sein, wobei an dem Kontaktbereich zwischen Unterteil 2 und Deckel 3 ein Dichtring vorgesehen sein kann.

An dem Deckel 3 ist auf einer Seite eine Klammer 4 ausgebildet, die über eine Achse 5 gelenkig mit dem Unterteil 2 verbunden ist. Dadurch ist der Deckel 3 verschwenkbar an dem Unterteil 2 gehalten.

Um den Deckel 3 an dem Unterteil 2 zu verriegeln, ist auf der zu der Klammer 4 gegenüberliegenden Seite ein Verschluss 6 vorgesehen. Der Verschluss 6 ist winkelförmig ausgebildet und umfasst einen Steg 7, der benachbart zu einer Seitenwand des Unterteils 2 angeordnet ist. Ferner ist an dem Verschluss 6 ein hakenförmiger Abschnitt 9 ausgebildet, der im Wesentlichen senkrecht zu dem Steg 7 abgewinkelt ist und den Deckel 3 zumindest teilweise übergreift. Auf der zu dem hakenförmigen Abschnitt 9 gegenüberliegenden Seite ist an dem Steg 7 eine Besteckausformung 8 ausgebildet, die eine Löffelform aufweist. Statt der Löffelform kann auch eine Gabelform oder eine andere Besteckform vorgesehen sein.

Um den Deckel 3 an dem Unterteil 2 zu verriegeln, ist an dem Deckel 3 ein nach oben gerichteter Vorsprung 10 ausgebildet, der in eine Aussparung an dem hakenförmigen Abschnitt 9 eingreift. Ferner ist an dem Unterteil 2 an einer Seitenwand ein hervorstehendes Halteelement 11 ausgebildet, das als Rastvorsprung ausgebildet ist und ebenfalls eine Aussparung in dem Steg 7 des Verschlusses 6 durchgreift. Es ist natürlich auch möglich, an dem Steg 7 einen Rastvorsprung auszubilden, der mit einem Rastelement an dem Unterteil 2 zusammenwirkt.

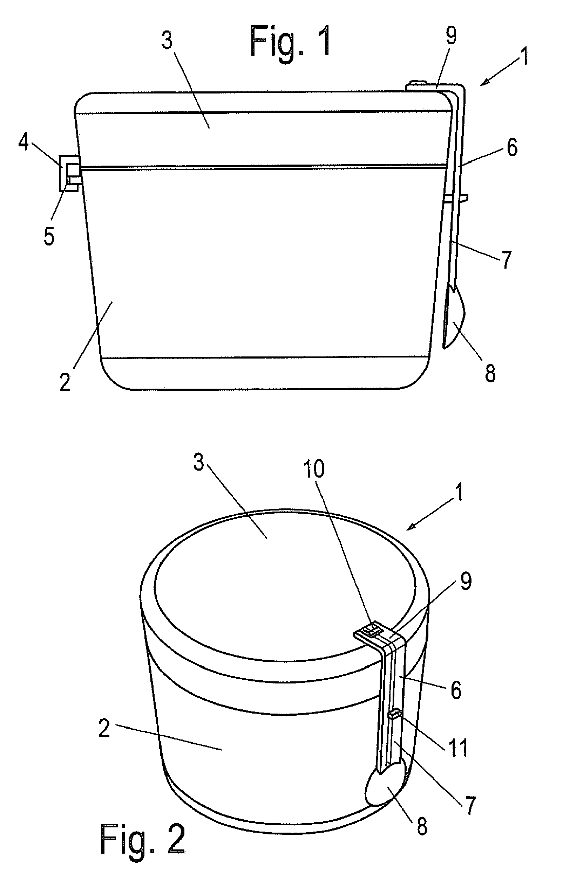

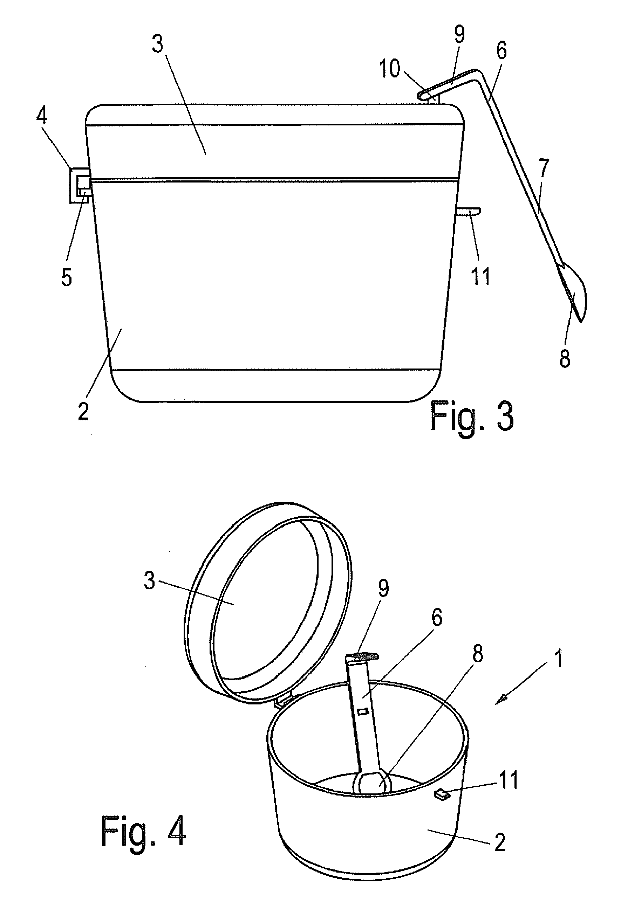

In der verriegelten Position des Verschlusses 6 (Figuren 1 und 2) kann der Deckel 3 nicht nach oben verschwenkt werden, da auf der einen Seite die Achse 5 den Deckel 3 am Unterteil 2 hält und auf der gegenüberliegenden Seite der hakenförmige Abschnitt 9 des Verschlusses 6 ein Anheben des Deckels 3 vermeidet. Um den Behälter 1 zu öffnen, wird zunächst der Verschluss 6 entsprechend Figur 3 verschwenkt, so dass der Steg 7 außer Eingriff mit dem Halteelement 11 gebracht wird. Dadurch kann der Deckel 3 auf der Seite des Verschlusses 6 nach oben geschwenkt werden. Der Benutzer kann nun den Verschluss 6 mit der Besteckausformung 8 komplett abnehmen und benutzen, um das in dem Unterteil 2 enthaltene Lebensmittel zu verspeisen. Der hakenförmige Abschnitt 9 an dem Steg 7 kann dabei über den Rand des Unterteils 2 gehängt werden, so dass der Verschluss 6 nicht unbeabsichtigt in das Unterteil hineinfallen kann.

Wenn der Behälter 1 wieder verschlossen werden soll, kann der Benutzer den Deckel 3 auf das Unterteil 2 schwenken. Anschließend wird der Verschluss 6 mit dem hakenförmigen Abschnitt 9 auf den Vorsprung 10 gesteckt und im Uhrzeigersinn verschwenkt, bis das Halteelement 11 in Eingriff mit dem Steg 7 gelangt ist.

In dem gezeigten Ausführungsbeispiel ist der Deckel 3 verschwenkbar an dem Unterteil 2 gehalten. Es ist auch möglich den Deckel 3 beabstandet zu dem Verschluss 6 über Haltemittel festzulegen, die ein vollständiges Abnehmen des Deckels 3 ermöglichen.

Bei dem gezeigten Ausführungsbeispiel ist ein Verschluss 6 mit einer Besteckausformung 8 vorgesehen. Es ist auch möglich, bei Bedarf mehrere Verschlüsse 6 mit verschiedenen Besteckausformungen 8 über den Umfang verteilt vorzusehen.

## Patentansprüche

1. Behälter (1), insbesondere für Lebensmittel, mit einem schalenförmigen Unterteil (2), an dem ein Deckel (3) montiert ist, und mindestens einem Verschluss (6), mittels dem der Deckel (3) an dem Unterteil (2) verriegelbar ist, **dadurch gekennzeichnet, dass** der mindestens eine Verschluss (6) als abnehmbares Besteckteil ausgebildet ist.

2. Behälter nach Anspruch 1, **dadurch gekennzeichnet, dass** der Verschluss (6) einen hakenförmigen Abschnitt (9) aufweist, der den Deckel (3) zumindest teilweise übergreift.

3. Behälter nach Anspruch 1 oder 2, **dadurch gekennzeichnet, dass** eine Besteckausformung (8) an dem zum hakenförmigen Abschnitt (9) gegenüberliegenden Ende ausgebildet ist.

4. Behälter nach einem der Ansprüche 1 bis 3, **dadurch gekennzeichnet, dass** an dem Deckel (3) ein Vorsprung (10) ausgebildet ist, der in eine Aussparung an dem hakenförmigen Abschnitt (9) einfügbar ist.

5. Behälter nach einem der Ansprüche 1 bis 4, **dadurch gekennzeichnet, dass** an dem Unterteil (2) ein Halteelement (11) ausgebildet ist, mittels dem der Verschluss (6) an dem Unterteil (2) fixierbar ist.

6. Behälter nach Anspruch 5, **dadurch gekennzeichnet, dass** das Halteelement (11) als Rastvorsprung ausgebildet ist, an dem der Verschluss (6) verrastbar ist.

7. Behälter nach einem der Ansprüche 1 bis 6, **dadurch gekennzeichnet, dass** zwischen dem Deckel (3) und dem Unterteil (2) ein elastisches Dichtmittel angeordnet ist.

8. Behälter nach einem der Ansprüche 1 bis 7, **dadurch gekennzeichnet, dass** auf der zu dem Verschluss (6) gegenüberliegenden Seite eine Schwenkachse (5) zwischen Deckel (3) und Unterteil (2) ausgebildet ist.
